# EUROPÄISCHE PATENTSCHRIFT

(11) **EP 3 151 992 B1**
(45) Veröffentlichungstag und Bekanntmachung des Hinweises auf die Patenterteilung: **26.08.2020**
(21) Anmeldenummer: 15739503.9
(22) Anmeldetag: 02.06.2015
(51) Int. Cl.: B23C 5/00, B23C 3/12, B27D 5/00, B27G 13/08, B27G 13/12

(54) **FRÄSWERKZEUG**
MILLING TOOL
OUTIL DE FRAISAGE

(30) Priorität: 03.06.2014 DE 102014008033
(43) Veröffentlichungstag der Anmeldung: 12.04.2017
(73) Patentinhaber: Leitz GmbH & Co. KG, 73447 Oberkochen (DE)
(72) Erfinder: KISSELBACH, Andreas, 73431 Aalen (DE); GRAEF, Jürgen, 73447 Oberkochen (DE); EHRENSPERGER, Heiko, 73457 Essingen (DE)
(74) Vertreter: Gramm, Lins & Partner Patent- und Rechtsanwälte PartGmbB
(86) Internationale Anmeldenummer: PCT/DE2015/000263
(87) Internationale Veröffentlichungsnummer: WO 2015/185026

(56) Entgegenhaltungen:
- DE-A1- 19 519 824
- DE-B- 1 228 051
- FR-A- 838 037
- JP-A- H04 176 505
- US-A- 633 452
- US-A- 703 272
- US-A- 4 541 165

## Beschreibung

Die Erfindung betrifft ein Fräswerkzeug gemäß dem Oberbegriff des Anspruchs 1 oder gemäß dem Oberbegriff des Anspruchs 2 zum Bearbeiten von Holz, Holzwerkstoffen, Kunststoffen oder Leichtmetall mit einem um eine Werkzeugdrehachse drehbaren, aus zumindest einem Gehäuse und einem Grundkörper bestehenden Werkzeugkörper, in dem mindestens zwei Schneidenträger diametral zueinander angeordnet sind, wobei jeder Schneidenträger um eine Trägerdrehachse drehbar im Werkzeugkörper angeordnet ist und eine Mehrzahl von Schneiden aufweist.

Ein solches Werkzeug ist beispielsweise aus der DE 195 19 824 A1 bekannt und wird hauptsächlich als Schleifwerkzeug verwendet. Durch eine Verdrehung der Schneidenträger um einen relativ kleinen Verdrehwinkel kann eine andere Umfangsfläche des Schleifkörpers zum Einsatz gebracht werden. Die Schneidenträger können auch als Fräseinsätze ausgebildet sein, die dann nach Verschleiß der Schneide um einen vorgegebenen Winkel verdreht werden, um erneut zum Einsatz zu gelangen. Das Verdrehen der Schneidenträger erfolgt mittels eines Innensechskantschlüssels, um alle Schneiden auf denselben Flugkreis einzustellen, muss bei dieser manuellen Verstellarbeit sehr sorgfältig gearbeitet werden. Das setzt eine hohe Erfahrung des Maschinenführers voraus.

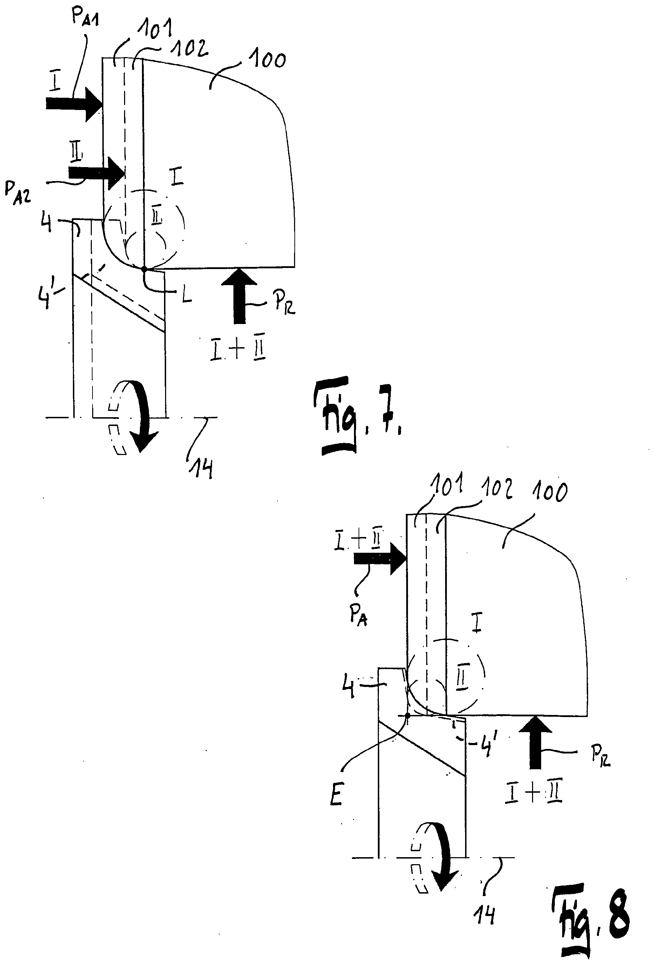

Die in der DE 199 15 672 C2 oder der EP 2 011 614 A1 beschriebenen Werkzeuge werden zum Zerspanen der Ecken und Kanten an plattenförmigen Werkstücken, insbesondere mit angeleimtem Kantenband verwendet. Um Toleranzen der Werkstückdicke zu kompensieren und um die Konturen an den Werkstückecken bearbeiten zu können, wird bei einer derartigen Bearbeitung das Werkzeug immer tastend zum Werkstück positioniert (Kopierfräsen). Die Tastung erfolgt dabei - bezogen auf ein rotierendes Zerspanungswerkzeug - in radialer und axialer Richtung. Bei Veränderung der Kantenbanddicke muss auch der Profilradius des Kopierfräsers an die Kantenbanddicke angepasst werden. Bei einer Fertigung kleiner Losgrößen erfordert das einen häufigen Werkzeugwechsel mit Produktionsunterbrechungen. Die Werkzeuge sind deshalb so schaltbar ausgebildet, dass unterschiedlich profilierte Schneiden mit dem Werkstück in Eingriff bringbar sind, also von einer Ruheposition in eine Arbeitsposition und umgekehrt gebracht werden können. Bei diesen Werkzeugen muss bei jedem Profilwechsel die axiale Tastung angepasst werden (vgl. Figur 7). Wenn sich ein kleinerer Profilradius in Arbeitsposition befindet, schneiden in dem umfangsseitigen Profilbereich auch die Schneiden eines größeren Profilradius mit, was zu einer erhöhten Reibung und beispielsweise an Kunststoffkanten zu Anschmelzungen führen kann. Die unterschiedlich profilierten Schneiden sind auf koaxial angeordneten Schneidenträgern befestigt. Die Schneidenträger können in axialer Richtung verschoben werden, um die jeweilige Schneide in Eingriff mit dem Werkstück zu bringen. Dieses Funktionsprinzip erfordert die koaxiale Anordnung der Werkzeuge mit Hohlwellen und aufeinander aufbauenden Lagerungen, was das Werkzeug mit zunehmender Anzahl an unterschiedlich profilierten Schneiden verkompliziert und einen entsprechend großen Bauraum erfordert. Praktikable Ausführungsformen können bei dieser Bauform nur drei unterschiedliche Profile realisieren.

Bei dem in der DE 20 2010 010 704 U1 offenbarten Fräswerkzeug sind die einzelnen Bearbeitungswerkzeuge (Schneiden und Schneidenträger) einzeln im Werkzeugrundkörper gelagert und darin axial verschiebbar angeordnet. Dadurch können sie einfach von einer Ruheposition (Nichtarbeitsposition) in eine Arbeitsposition - und umgekehrt - bewegt werden. Es können alle Schneidenträger frei beweglich sein und bei Bedarf in Arbeitsposition gebracht werden. Einer der Schneidenträger kann auch bereits fest in seiner Arbeitsposition positioniert sein, sodass die übrigen Schneidenträger mit den unterschiedlich profilierten Schneiden, die nicht benötigt werden, in ihre Ruheposition zurückgezogen werden können.

Wenn ein Schneidenträger fest in Arbeitsposition eingebaut ist und die anderen bei Bedarf zugeschaltet werden, muss auch bei diesem Werkzeug bei jedem Profilwechsel die axiale Tastung angepasst werden, und es schneiden in den umfangsseitigen Profilbereich auch die Schneiden eines größeren Profilradius mit, was - wie bereits beschrieben - zu erhöhter Reibung und damit zu Anschmelzungen an Kunststoffkanten oder Verfärbung des Werkstücks führen kann. Außerdem muss der bei der Bearbeitung aktivierte Schneidenträger (Bearbeitungswerkzeug) immer durch eine äußere Kraft gegen Schnittdruck und Federrückstellkräfte in Arbeitsposition gehalten werden. Durch die Anordnung der einzelnen Bearbeitungswerkzeuge außerhalb der Rotationsachse des Fräswerkzeuges wirken drehzahlabhängige Fliehkräfte auf die Schneidenträger und erschweren durch die damit einhergehende Reibung deren axiale Verschiebung, weshalb die Funktion des Fräswerkzeuges stark drehzahlabhängig ist.

Ein ähnliches Mehrprofilfräswerkzeug ist in der EP 2 492 071 A2 offenbart. Hierbei ist eine erste Fräseinrichtung in einer Arbeitsstellung angeordnet und eine zweite koaxial hierzu angeordnete Fräseinrichtung über eine Spindel in ihre Arbeitsstellung bewegt werden kann. Auch dieses Fräswerkzeug ist mit den vorbeschriebenen Nachteilen behaftet.

Bei den bekannten Werkzeugen ist ein Profilwechsel ohne Werkzeugwechsel und ohne Verstellung der radialen und axialen Tastung nicht möglich. Die Verstellung der Schneidenträger muss außerdem sehr sorgfältig erfolgen, damit jede Schneide, die sich in ihrer Arbeitsposition befindet, denselben Flugkreisdurchmesser einnimmt, um eine qualitativ hochwertige Schnittbildung erzeugen zu können.

Die US 864,420 A offenbart einen Schneidkopf, mit dem Nuten und Federn hergestellt werden können. Mittels einer Drehbewegung des Grundkörpers werden die Schneidenträger in axialer Richtung verlagert. Durch die Einstellbarkeit des axialen Abstandes zwischen zwei Schneidenträgern kann die zu fräsende Nutbreite bzw. Federbreite eingestellt werden.

Von dieser Problemstellung soll das eingangs beschriebene Fräswerkzeug so verbessert werden, dass eine exakte Einstellung der Schneidenträger in ihrer vorgesehenen Winkelposition möglich ist, insbesondere auch dann, wenn eine elektromotorische Verstellung vorgesehen werden soll.

Zur Problemlösung zeichnet sich ein gattungsgemäßes Werkzeug dadurch aus, dass jedem Schneidenträger eine Rastscheibe zugeordnet ist, und dass zwischen den Rastscheiben und dem Grundkörper eine federbelastete Klemmscheibe angeordnet ist, die keilförmige Vorsprünge aufweist, die mit in den Rastscheiben vorgesehenen Schlitzen zusammenwirken, um die Schneidenträger in Umfangsrichtung zu verrasten.

Die Verrastung kann auch dadurch erfolgen, dass in den Rastscheiben keilförmige Vorsprünge und in der Klemmscheibe Schlitze vorgesehen sind. Im Übrigen erfolgt die Problemlösung wie zuvor beschrieben.

Die in den Rastscheiben vorgesehenen Schlitze sind komplementär zu den Vorsprüngen an der Klemmscheibe ausgebildet. Durch die Federbelastung der Klemmscheibe gleiten die Vorsprünge in den Schlitzen, bis sie axial anschlagen und darin verrasten, sodass die Schneidenträger auch dann in ihrer exakten Winkelposition fixiert werden, wenn diese Winkelposition bei der Verstellung an sich nicht exakt angefahren wurde.

Durch diese Ausgestaltung hängt die Bearbeitungsqualität nach einem Profilwechsel nur noch von der Genauigkeit des Werkzeugs (der Schneiden bzw. der Schneidenträger selbst) und nicht von der Einstellgenauigkeit der Winkelposition der Schneidenträger ab. Durch die keilförmige Ausgestaltung von Vorsprüngen und Schlitzen wird es erleichtert, die Arretierungsposition zu finden. Sollten die Schneidenträger nicht verrastet sein, erfolgt die Verrastung selbsttätig, wenn auf sie in Kombination mit der Federkraft eine Kraft in Umfangsrichtung aufgebracht wird. Die manuelle und motorische Einstellbarkeit des Werkzeuges wird dadurch sehr erleichtert. Durch die drehbar im Werkzeugkörper angeordneten Schneidenträger wird ein Revolver-Werkzeug geschaffen, mit dem es möglich ist, dass nur die Schneiden an der Zerspanung beteiligt sind, die sich in Arbeitsposition radial außen befinden. Die übrigen Schneiden befinden sich radial innerhalb des Schneidenflugkreises des Fräswerkzeugs und sind daher nicht an der Zerspanung beteiligt. Wenn die Schneiden alle identisch profiliert sind, wird durch diese Revolver-Ausbildung die Standzeit des Werkzeugs entsprechend der Anzahl der Schneiden verlängert.

Um das Verrasten der Vorsprünge mit den Schlitzen zu erleichtern, ist zwischen dem Grundkörper und der Klemmscheibe vorzugsweise mindestens eine Druckfeder angeordnet. Vorteilhafterweise können auch eine Mehrzahl Druckfedern vorgesehen sein.

Um die Druckfedern in Umfangsrichtung zu sichern, sitzen diese vorzugsweise in in der Klemmscheibe und dem Grundkörper vorgesehenen Taschen.

Vorzugsweise sind in jedem Schneidenträger zumindest zwei Typen unterschiedlich profilierter Schneiden angeordnet, deren Anordnung aber in allen Schneidenträgern identisch ist. Insbesondere vorzugsweise ist jede Schneide in jedem Schneidenträger unterschiedlich profiliert, sodass eine entsprechend hohe Anzahl unterschiedlicher Profile an den Werkzeugkanten ausgebildet werden können, ohne einen Werkzeugwechsel erforderlich werden zu lassen, was nicht nur die Arbeitsflexibilität erhöht, sondern insbesondere auch die Rüstzeiten drastisch reduziert.

Vorteilhaft ist es, dass durch eine Verdrehung des Schneidenträgers um die Trägerachse eine Schneide von ihrer Ruheposition in die Arbeitsposition bringbar ist, was insbesondere dazu führt, dass sich jeweils nur eine einzige Schneide in jedem Schneidenträger in einer Arbeitsposition befindet und die übrigen Schneiden in ihrer Ruheposition sind.

Vorteilhaft ist es, wenn die Verdrehung der Schneidenträger synchron erfolgt. Damit kann insbesondere sichergestellt werden, dass alle sich in ihrer Arbeitsposition befindenden Schneiden identisch profiliert sind und denselben Schneidenflugkreisdurchmesser aufweisen.

Um die synchrone Verdrehung der Schneidenträger zu realisieren, können diese über ein Schaltgetriebe, das ein Planetengetriebe oder ein Maltesergetriebe sein kann, zwangsgekoppelt sein.

Wenn das Schaltgetriebe ein Planetengetriebe ist, kann dieses mit einem konzentrisch zur Werkzeugdrehachse angeordneten Sonnenrad oder Kronenrad als zentrales Stellrad und mit konzentrisch zur jeweiligen Trägerdrehachse angeordneten Planetenrädern als periphere Stellräder versehen sein. Der Wechsel auf ein anderes Profil erfolgt dann durch relative Verdrehung des zentralen Stellrades zu den peripheren Stellrädern. Die relative Verdrehung der Stellräder erfolgt dabei durch die Werkzeugdrehachse, indem das zentrale Stellrad drehfest arretiert wird und der Grundkörper um einen definierten Winkel um seine Werkzeugachse verdreht wird, oder durch ein Verdrehen des Gehäuses, mit dem das zentrale Stellrad fest verbunden ist, wodurch dann die peripheren Stellräder und die mit diesen drehfest verbundenen Schneidenträgern verdreht werden.

Die relative Verdrehung des zentralen Stellrades kann auch durch eine axiale Bewegung eines konzentrisch zu Werkzeugdrehachse angeordneten Schaltelementes erfolgen, indem an diesem Schaltelement schräge Flächen vorgesehen sind, die mit korrespondierenden schrägen Flächen an dem zentralen Stellrad zusammenwirken und eine axiale Bewegung des Schaltelementes in eine Drehbewegung des zentralen Stellrades umwandeln ("Kugelschreibermechanismus").

Wenn die Verdrehung der Schneidenträger in Schritten erfolgt, ist es vorteilhaft, wenn jeder Schneidenträger mechanisch verriegelt wird, wenn sich die entsprechende Schneide in ihrer Arbeitsposition befindet, sodass die Schrittfolge der Verdrehung der Schneidenträger eingehalten wird.

Die Rastscheibe weist Schlitze oder Ausnehmungen auf, die über den Umfang entsprechend der Schrittlänge angeordnet sind und in die Vorsprünge der zentralen Klemmscheibe einrasten können. Durch eine axiale Verschiebung der Klemmscheibe erfolgt dann die Fixierung der Schneidenträger.

Als insbesondere vorteilhaft hat sich bei dem erfindungsgemäßen Bearbeitungswerkzeug herausgestellt, dass der Wechsel auf ein anderes Profil unter Drehzahl erfolgen kann.

Mit Hilfe einer Zeichnung soll ein Ausführungsbeispiel der Erfindung nachfolgend näher beschreiben werden. Es zeigen:
- Figur 1 -: die perspektivische Darstellung eines Fräswerkzeuges;
- Figur 2 -: einen Querschnitt des Fräswerkzeuges in Arbeitsposition;
- Figur 3 -: einen Querschnitt des Fräswerkzeuges in Schaltposition;
- Figur 4 -: die Explosionsdarstellung des Fräswerkzeuges von der Bearbeitungsseite;
- Figur 5 -: die Explosionsdarstellung des Fräswerkzeuges von der Antriebsseite;

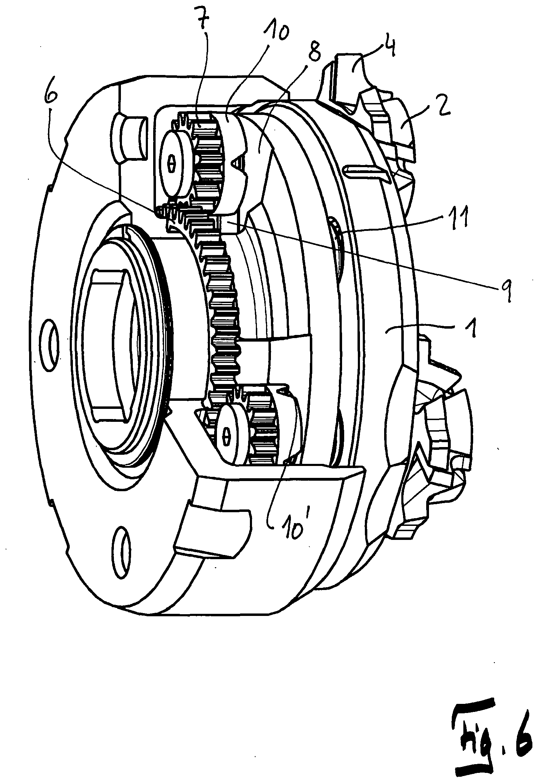

- Figur 6 -: eine teilgeschnittene Ansicht des Fräswerkzeuges in Arbeitsposition;
- Figur 7 -: eine Prinzipdarstellung einer profilspezifischen Tastung (Stand der Technik),
- Figur 8 -: eine Prinzipdarstellung der Tastung bei einem erfindungsgemäßen Werkzeug.

Das um eine Werkzeugdrehachse 14 drehende Fräswerkzeug besteht im Wesentlichen aus dem Werkzeugkörper 20, der gebildet wird aus dem axial auf der hier nicht dargestellten Antriebswelle angeordneten Grundkörper 1 und dem mit diesem verbundenen Gehäuse 5, der mit Federn 11 vorgespannten Klemmscheibe 8, den die Schneiden 4, 4', 4", 4'" tragenden Schneidenträgern 2 und einem Planetengetriebe mit dem Sonnenrad 6 und den Planetenrädern 7.

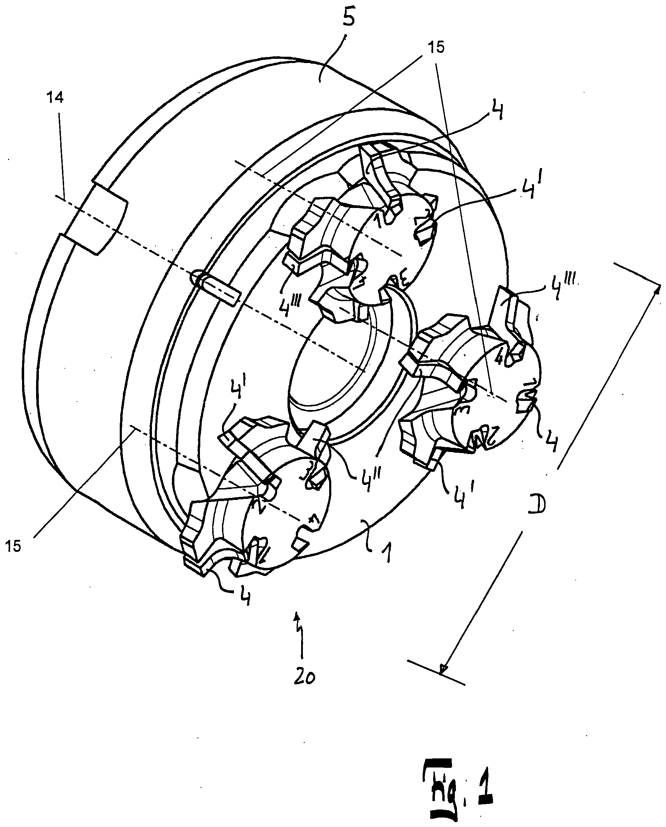

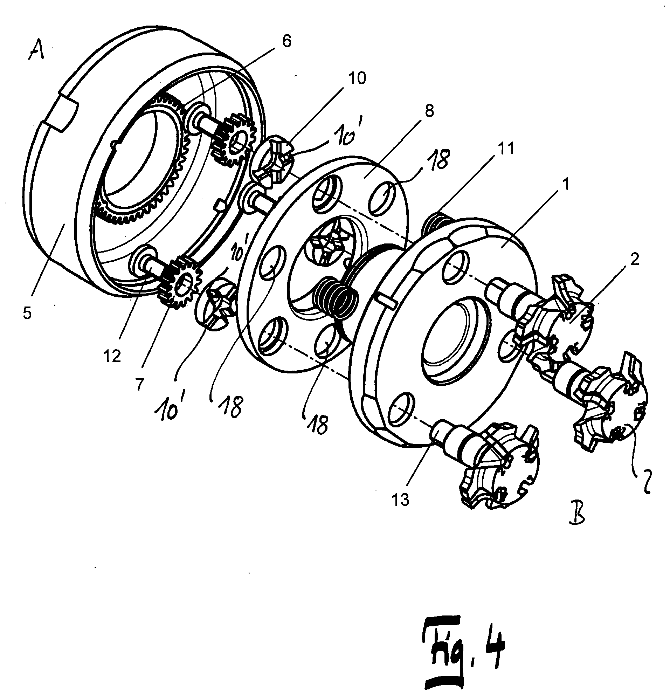

Wie Figur 4 zeigt, ist am Boden des Gehäuses 5 innen ein Zahnkranz drehfest angeordnet, der das Sonnenrad 6 bildet. Der Grundkörper 1, der über seine Buchse 16 auf eine Antriebswelle aufgesetzt wird, ist über einen Sprengring 17 mit dem Gehäuse 5 verbunden und weist auf seiner der Antriebsseite A abgewandten Bearbeitungsseite B auf einen gemeinsamen Teilkreis drei Durchgangsbohrungen 3 auf, die als Lagersitz für drei Schneidenträger 2 dienen. Jeder Schneidenträger 2 weist auf seinem Umfang vier regelmäßig beabstandete Schneiden 4, 4', 4", 4'" auf. Die Profilierung der Schneiden 4, 4', 4", 4'" kann identisch oder unterschiedlich sein. Vorzugsweise ist jede Schneide 4, 4', 4", 4"' unterschiedlich profiliert. Die Reihenfolge, also die Anordnung der Schneiden 4, 4', 4", 4'" hintereinander, ist auf jedem Schneidenträger 2 identisch, so dass immer derselbe Schneidentyp 4 oder 4' oder 4" oder 4'" in der jeweiligen Arbeitsposition mit demselben Schneidenflugkreisdurchmesser D ist. In der Darstellung nach Figur 1 befinden sich die Schneiden 4 in ihrer Arbeitsposition. Die übrigen Schneiden 4', 4", 4"' befinden sich in ihrer Ruheposition.

Die Schneidenträger 2 sind zapfenförmig ausgebildet und ihr Schaft 2', der ebenfalls als Lagersitz ausgebildet ist, ist an seinem Ende mit einer Gewindebohrung 2" versehen. Je ein als peripheres Stellrad dienendes Zahnrad 7, ist mit einer zentralen Bohrung auf den Sitz 13 jedes Schaftes 2' aufgesetzt und über je eine Schraube 12 in der Gewindebohrung 2" festgeschraubt. Zwischen den Zahnrädern 7 ist jeweils eine Rastscheibe 10 eingesetzt. Außerdem ist im Gehäuse 5 eine Klemmscheibe 8 angeordnet, die sich einerseits über drei Druckfedern 11 gegen den Grundkörper 1 und andererseits gegen die Rastscheiben 10 abstützt. Um die Druckfedern 11 zu sichern, sitzen diese in in der Klemmscheibe 8 vorgesehenen Taschen 18 und in dem Grundkörper 1 vorgesehenen Taschen 19.

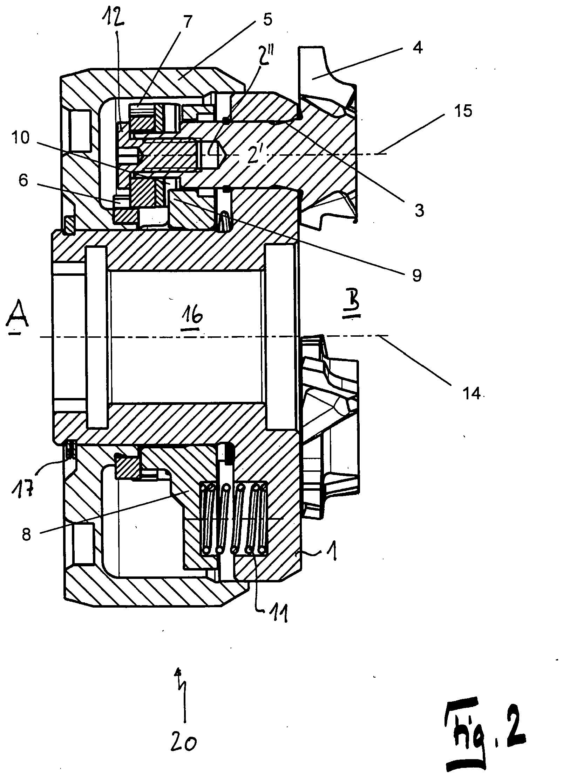

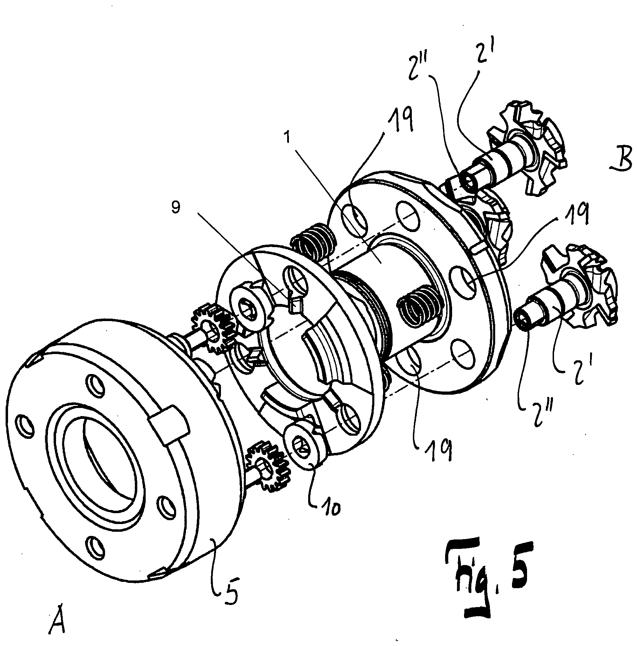

Die Schneidenträger 2 sind in ihrer in Figur 2 dargestellten Arbeitsposition mit dem Planetengetriebe gekoppelt. Zur Kopplung sind an der zur Antriebsseite A weisenden Unterseite der Klemmscheibe 8 auf einem Teilkreis gleichmäßig verteilt angeordnete Vorsprünge 9 vorgesehen, die keilförmig ausgebildet sind (vergleiche Figur 5). In den Rastscheiben 10 sind zu der Keilform der Vorsprünge 9 komplementäre Schlitze 10' eingebracht (vergleiche Figur 4).

Anstatt Schlitze 10' in den Rastscheiben 10 und Vorsprünge 9 in der Klemmscheibe 8 vorzusehen, können auch die Rastscheiben 10 mit Vorsprüngen und die Klemmscheibe 8 mit Schlitzen versehen werden (nicht gezeigt). Die Funktionsweise ändert sich dadurch nicht. Es wird nur die kinematische Umkehr gewählt.

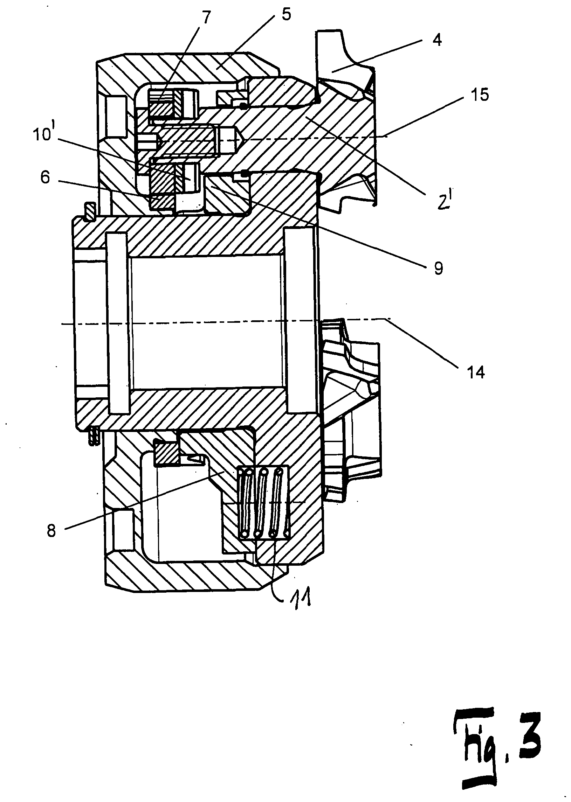

Um das Profil zu wechseln, müssen andere Schneiden 4, 4', 4", 4'" in ihre Arbeitsposition gebracht werden. Hierzu ist es notwendig, die als Revolver arbeitenden Schneidenträger 2 um denselben Winkel zu verdrehen. Zum Profilwechsel wird das Gehäuse 5 und mit ihm die Klemmscheibe 8 gegen die Federn 11 in Richtung der Bearbeitungsseite B gedrückt (vergleiche Figur 3). Dabei wird die drehfeste Verbindung zwischen dem Gehäuse 5 und dem Grundkörper 1 gelöst. Die Vorsprünge 9 kommen außer Eingriff mit den Schlitzen 10'. Durch ein Verdrehen des Gehäuses 5, mit dem das zentrale Stellrad 6 fest verbunden ist, werden die peripheren Stellräder 7 und folglich die mit diesen verschraubten Schneidenträger 2 verdreht. Ist die gewünschte Schneide 4, 4', 4", 4'" in ihre Arbeitsposition gedreht, wird das Gehäuse 5 entlastet und bewegt sich infolge der Federkraft in Richtung der Antriebsseite A zurück, und ist über die Vorsprünge 9 und Schlitze 10' wieder drehfest mit dem Grundkörper 1 verbunden. Dabei rasten die Vorsprünge 9 in den entsprechenden Schlitz 10' der Rastscheibe 10 ein. Durch die keilförmige Ausgestaltung von Vorsprüngen 9 und Schlitzen 10' wird es erleichtert, die Arretierungsposition zu finden. Sollten die Schneidenträger 2 nicht verrastet sein, erfolgt die Verrastung selbsttätig, wenn auf sie in Kombination mit der Kraft der Druckfedern 11 eine Kraft in Umfangsrichtung aufgebracht wird. Die keilförmigen Vorsprünge 9 gleiten dann in die entsprechenden Schlitze 10'.

Der Vollständigkeit halber sei darauf hingewiesen, dass die Schneidenträger 2 alle identisch ausgebildet sind. Auch jeder Schneidentyp 4 oder 4' oder 4" oder 4'" ist identisch ausgebildet. Wenn die Schneiden 4, 4', 4", 4'" unterschiedliche Profile aufweisen, bewirkt ein Schaltvorgang einen Profilwechsel am Fräswerkzeug, wenn mehrere Schneiden 4, 4', 4", 4'" dasselbe Profil aufweisen, bewirkt ein Schaltvorgang eine Verlängerung des Standweges für dieses Profil. Besonders vorteilhaft wirkt es sich aus, wenn die Lagerung der Schneidenträger 2 im Grundkörper 1 durch einen konischen Lagersitz 3 erfolgt, damit die Schneidenträger 2 durch die axiale Klemmkraft spielfrei in der Arbeitsposition gehalten werden und sich nicht durch Fliehkrafteinwirkung setzen können.

Der Schaltvorgang kann an der stillstehenden Bearbeitungsvorrichtung manuell erfolgen oder automatisch durch die Maschine.

Durch die Ausgestaltung des Fräswerkzeuges mit um eine Trägerachse 15 drehbar gelagerten Revolvern, die um die zentrale Werkzeugdrehachse 14 rotieren, wird bewirkt, dass nur die Schneiden 4 an der Zerspanung beteiligt sind, die sich in Arbeitsposition radial außen befinden. Die übrigen Schneiden 4', 4", 4'" befinden sich radial innerhalb des Schneidenflugkreises des Fräswerkzeuges und sind daher nicht an der Zerspanung beteiligt. Dadurch ist es möglich, die Profile der Schneiden 4, 4', 4", 4'" derart auf den Schneidenträgern 2 (Revolvern) anzuordnen, dass alle Profile dieselbe axiale und radiale Position hinsichtlich der erforderlichen Tastung des Fräswerkzeuges am Werkstück einnehmen. Dieses Prinzip ist in Figur 8 dargestellt, wenn der Referenzpunkt die Werkstückecke" E ist. In der Situation I ist ein dickes Kantenband 101 am Werkstück 100 angebracht. In der Situation II ist (gestrichelt dargestellt) ein dünnes Kantenband 102 vorgesehen. In der Situation I ist ein größerer Profilradius realisiert als in der Situation II. Ersichtlich ist, dass die radiale Tastung (Pfeil P_{R}) für beide Situationen I, II identisch ist, weil beide Profilschneiden im Referenzpunkt E denselben Schneidenflugkreisdurchmesser D aufweisen. Auch die axiale Tastung (Pfeil P_{A}) ist für beide Situationen I, II dieselbe, weil sich der Referenzpunkt E auf die (theoretische) Werkstückecke des mit dem Kantenband 101, 102 versehenen Werkstücks 100 bezieht und die axiale Tastung ebenfalls an dem angeleimten Kantenband 101, 102 erfolgt.

Figur 7 zeigt die profilspezifische Tastung nach dem Stand der Technik, wenn der Referenzpunkt die "Leimfuge" L ist. Die Situation I und die Situation II sind identisch zu den in Figur 8 dargestellten bzw. hier zu erläuternden Situationen. Auch hier ist die radiale Tastung (Pfeil P_{R}) für beide Situationen identisch, weil beide Profilschneiden im Referenzpunkt L denselben Schneidenflugkreisdurchmesser aufweisen. Die axiale Tastung (Pfeile P_{A1}, P_{A2}) hingegen ist für Situation I und Situation II unterschiedlich, weil der Referenzpunkt L auf der Kante des Werkstücks 100, nämlich der Leimfuge liegt, die axiale Tastung hingegen an dem angeleimten Kantenband 101 beziehungsweise 102 erfolgt. Unterschiedlich dicke Kantenbänder 101, 102 erfordern also immer einen axialen Versatz der Tastung.

Das erfindungsgemäße Funktionsprinzip führt zu einem sehr klein bauenden Fräswerkzeug, weshalb eine große Anzahl Profile bei einem kleinen Werkzeugdurchmesser untergebracht werden kann. Da die Schaltvorgänge für einen Profilwechsel durch Drehbewegungen ausgeführt werden, können die Schneidenträger 2 im Bedarfsfall mit Wälzlagern gelagert werden, um bei einer Verstellung unter Drehzahl die Fliehkraft bedingten Reibkräfte gering zu halten und Schaltvorgänge auch bei hohen Drehzahlen zu ermöglichen. Grundsätzlich ist ein derartiges Fräswerkzeug auch geeignet, für eine Linearzerspanung eingesetzt zu werden, indem auf die Rotationsachse verzichtet wird. Im einfachsten Fall besteht das Werkzeug dann nur aus einem Revolver mit mindestens zwei Schneiden, vorzugsweise mit unterschiedlichen Profilen, die in der zuvor beschriebenen Weise in Arbeitsposition gebracht werden. Auf diese Weise kann beispielsweise ein Profilwechsel bei einem Ziehklingenaggregat ermöglicht werden.

### Bezugszeichenliste

- 1: Grundkörper
- 2: Schneidenträger (Revolver)
- 3: Lagersitz
- 4: Schneide
- 4': Schneide
- 4": Schneide
- 4"': Schneide
- 5: Gehäuse
- 6: Sonnenrad/zentrales Stellrad
- 7: Planetenrad/peripheres Stellrad
- 8: Klemmscheibe
- 9: Vorsprung
- 10: Rastscheibe
- 10': Schlitz
- 11: Druckfeder
- 12: Schraube
- 13: Sitz
- 14: Trägerdrehachse
- 15: Werkzeugdrehachse
- 16: Buchse
- 17: Ring
- 18: Tasche
- 19: Tasche
- 20: Werkzeugkörper
- 100: Werkstück
- 101: Kantenband
- 102: Kantenband
- A: Antriebsseite
- B: Bearbeitungsseite
- D: Schneidenflugkreisdurchmesser
- E: Werkzeugecke
- L: Leimfuge
- P_{A}: Pfeil
- P_{A1}: Pfeil
- P_{A2}: Pfeil
- P_{R}: Pfeil
- I: Situation
- II: Situation

## Patentansprüche

1. Fräswerkzeug zum Bearbeiten von Holz, Holzwerkstoffen, Kunststoffen oder Leichtmetall mit einem um eine Werkzeugdrehachse (14) drehbaren, aus zumindest einem Gehäuse (5) und einem Grundkörper (1) bestehenden Werkzeugkörper (20), in dem mindestens zwei Schneidenträger (2) über den Umfang gleichmäßig beabstandet zueinander angeordnet sind, wobei jeder Schneidenträger (2) um eine Trägerdrehachse (15) drehbar im Werkzeugkörper (20) angeordnet ist und eine Mehrzahl von Schneiden (4, 4', 4", 4"') aufweist, **dadurch gekennzeichnet, dass** jedem Schneidenträger (2) eine Rastscheibe (10) zugeordnet ist, und dass zwischen den Rastscheiben (10) und dem Grundkörper (1) eine federbelastete Klemmscheibe (8) angeordnet ist, die keilförmige Vorsprünge (9) aufweist, die mit in den Rastscheiben (10) vorgesehenen Schlitzen (10') zusammenwirken, um die Schneidenträger (2) in Umfangsrichtung zu verrasten.

2. Fräswerkzeug zum Bearbeiten von Holz, Holzwerkstoffen, Kunststoffen oder Leichtmetall mit einem um eine Werkzeugdrehachse (14) drehbaren, aus zumindest einem Gehäuse (5) und einem Grundkörper (1) bestehenden Werkzeugkörper (20), in dem mindestens zwei Schneidenträger (2) über den Umfang gleichmäßig beabstandet zueinander angeordnet sind, wobei jeder Schneidenträger (2) um eine Trägerdrehachse (15) drehbar im Werkzeugkörper (20) angeordnet ist und eine Mehrzahl von Schneiden (4, 4', 4", 4"') aufweist, **dadurch gekennzeichnet, dass** jedem Schneidenträger (2) eine Rastscheibe (10) zugeordnet ist, und dass zwischen den Rastscheiben (10) und dem Grundkörper (1) eine federbelastete Klemmscheibe (8) angeordnet ist, die mit Schlitzen versehen ist, die mit an den Rastscheiben (10) vorgesehenen keilförmigen Vorsprüngen zusammenwirken, um die Schneidenträger (2) in Umfangsrichtung zu verrasten.

3. Fräswerkzeug nach Anspruch 1 oder 2, **dadurch gekennzeichnet, dass** zwischen dem Grundkörper (1) und der Klemmscheibe (8) mindestens eine Druckfeder (11) angeordnet ist.

4. Fräswerkzeug nach Anspruch 3, **dadurch gekennzeichnet, dass** eine Mehrzahl Druckfedern (11) vorgesehen ist.

5. Fräswerkzeug nach Anspruch 4, **dadurch gekennzeichnet, dass** die Druckfedern (11) im Grundkörper (1) und der Klemmscheibe (8) eingebrachten Taschen (18, 19) angeordnet sind.

6. Fräswerkzeug nach einem der vorstehenden Ansprüche, **dadurch gekennzeichnet, dass** in jedem Schneidenträger (2) zumindest zwei Typen unterschiedlich profilierter Schneiden (4, 4', 4", 4"') angeordnet sind, deren Anordnung in allen Schneidenträgern (2) identisch ist.

7. Fräswerkzeug nach Anspruch 6, **dadurch gekennzeichnet, dass** jede Schneide (4, 4', 4", 4"') in jedem Schneidenträger (2) unterschiedlich profiliert ist.

8. Fräswerkzeug nach einem der vorstehenden Ansprüche, **dadurch gekennzeichnet, dass** sich jeweils nur eine einzige Schneide (4) in jedem Schneidenträger (2) in einer Arbeitsposition und die übrigen Schneiden (4', 4", 4"') in einer Ruheposition befinden.

9. Fräswerkzeug nach einem der vorstehenden Ansprüche, **dadurch gekennzeichnet, dass** durch eine Verdrehung des Schneidenträgers (2) um die Trägerdrehachse (15) eine Schneide (4, 4', 4", 4"') von ihrer Ruheposition in ihre Arbeitsposition bringbar ist.

10. Fräswerkzeug nach Anspruch 9, **dadurch gekennzeichnet, dass** die Verdrehung der Schneidenträger (2) synchron erfolgt.

11. Fräswerkzeug nach einem der Ansprüche 1 oder 8-10, **dadurch gekennzeichnet, dass** die in ihrer Arbeitsposition befindlichen Schneiden (4, 4', 4", 4"') identisch profiliert sind und denselben Schneidenflugkreisdurchmesser aufweisen.

12. Fräswerkzeug nach einem der vorstehenden Ansprüche, **dadurch gekennzeichnet, dass** die Schneidenträger (2) über ein Schaltgetriebe (6, 7) zwangsgekoppelt sind.

13. Fräswerkzeug nach Anspruch 12, **dadurch gekennzeichnet, dass** das Schaltgetriebe ein Planetengetriebe ist, das ein konzentrisch zur Werkzeugdrehachse (14) angeordnetes Sonnenrad (6) oder Kronenrad als zentrales Stellrad konzentrisch zur jeweiligen Trägerdrehachse (15) angeordnete Planetenräder (7) als periphere Stellräder aufweist.

14. Fräswerkzeug nach einem der vorstehenden Ansprüche, **dadurch gekennzeichnet, dass** die Verdrehung der Schneidenträger (2) in Schritten erfolgt und jeder Schneidenträger (2) mechanisch verriegelt wird, wenn die entsprechende Schneide (4, 4', 4", 4"') ihre Arbeitsposition erreicht hat.

## Claims

1. Milling tool for machining wood, wood-based materials, plastics or light metal, having a tool body (20) which can be rotated about a tool axis of rotation (14) and which consists of at least a housing (5) and a basic body (1) and in which at least two blade carriers (2) are arranged uniformly spaced apart from one another over the circumference, wherein each blade carrier (2) is arranged in the tool body (20) so as to be rotatable about a carrier axis of rotation (15) and has a plurality of blades (4, 4', 4", 4"'), **characterized in that** each blade carrier (2) is assigned a latching disc (10), and **in that** a spring-loaded clamping disc (8) is arranged between the latching discs (10) and the basic body (1) and has wedge-shaped projections (9) which interact with slots (10') provided on the latching discs (10) in order to latch the blade carriers (2) in the circumferential direction.

2. Milling tool for machining wood, wood-based materials, plastics or light metal, having a tool body (20) which can be rotated about a tool axis of rotation (14) and which consists of at least a housing (5) and a basic body (1) and in which at least two blade carriers (2) are arranged uniformly spaced apart from one another over the circumference, wherein each blade carrier (2) is arranged in the tool body (20) so as to be rotatable about a carrier axis of rotation (15) and has a plurality of blades (4, 4', 4", 4"'), **characterized in that** each blade carrier (2) is assigned a latching disc (10), and **in that** a spring-loaded clamping disc (8) is arranged between the latching discs (10) and the basic body (1) and is provided with slots which interact with wedge-shaped projections provided on the latching discs (10) in order to latch the blade carriers (2) in the circumferential direction.

3. Milling tool according to Claim 1 or 2, **characterized in that** at least one compression spring (11) is arranged between the basic body (1) and the clamping disc (8).

4. Milling tool according to Claim 3, **characterized in that** a plurality of compression springs (11) are provided.

5. Milling tool according to Claim 4, **characterized in that** the compression springs (11) are arranged in pockets (18, 19) incorporated in the basic body (1) and the clamping disc (8).

6. Milling tool according to one of the preceding claims, **characterized in that** each blade carrier (2) has arranged therein at least two types of differently profiled blades (4, 4', 4", 4"') whose arrangement is identical in all blade carriers (2).

7. Milling tool according to Claim 6, **characterized in that** each blade (4, 4', 4", 4"') is differently profiled in each blade carrier (2).

8. Milling tool according to one of the preceding claims, **characterized in that** in each case only a single blade (4) in each blade carrier (2) is situated in a working position and the remaining blades (4, 4', 4", 4"') are situated in an inoperative position.

9. Milling tool according to one of the preceding claims, **characterized in that** a blade (4, 4', 4", 4"') can be brought from its inoperative position into its working position by rotating the blade carrier (2) about the carrier axis of rotation (15).

10. Milling tool according to Claim 9, **characterized in that** the rotation of the blade carriers (2) occurs synchronously.

11. Milling tool according to one of Claims 1 or 8-10, **characterized in that** the blades (4, 4', 4", 4"') situated in their working position are identically profiled and have the same blade pitch circle diameter.

12. Milling tool according to one of the preceding claims, **characterized in that** the blade carriers (2) are positively coupled via a shift gear mechanism (6, 7).

13. Milling tool according to Claim 12, **characterized in that** the shift gear mechanism is a planetary gear mechanism which has a sun wheel (6) or crown wheel as central adjusting wheel arranged concentrically to the tool axis of rotation (14) and planet wheels (7) as peripheral adjusting wheels arranged concentrically to the respective carrier axis of rotation (15) .

14. Milling tool according to one of the preceding claims, **characterized in that** the rotation of the blade carriers (2) occurs in steps, and each blade carrier (2) is mechanically locked when the corresponding blade (4, 4', 4", 4"') has reached its working position.

## Revendications

1. Outil de fraisage pour l'usinage de bois, de matériaux à base de bois, de matières plastiques ou de métaux légers, comportant un corps d'outil (20) pouvant tourner autour d'un axe de rotation (14) de l'outil et constitué d'au moins un boîtier (5) et d'un corps de base (1) et dans lequel au moins deux supports de tranchant (2) sont disposés à une distance régulière l'un de l'autre sur la périphérie, chaque support de tranchant (2) étant disposé dans le corps d'outil (20) de manière à pouvoir tourner autour d'un axe de rotation (15) du support et présentant plusieurs tranchants (4, 4', 4", 4"'),
**caractérisé en ce que**
un disque d'enclenchement (10) est associé à chaque support de tranchant (2), et **en ce que**
un disque de serrage (8) chargé par ressort est disposé entre les disques d'enclenchement (10) et le corps de base (1) et présente des saillies (9) en forme de coin qui coopèrent avec des fentes (10') prévues dans les disques d'enclenchement (10) afin d'enclencher les supports de tranchant (2) dans la direction périphérique.

2. Outil de fraisage pour l'usinage de bois, de matériaux à base de bois, de matières plastiques ou de métaux légers, comprenant un corps d'outil (20) pouvant tourner autour d'un axe de rotation (14) de l'outil et constitué d'au moins un boîtier (5) et d'un corps de base (1), dans lequel au moins deux supports de tranchant (2) sont disposés à une distance régulière sur la périphérie, chaque support de tranchant (2) étant disposé dans le corps d'outil (20) de manière à pouvoir tourner autour d'un axe de rotation (15) du support et présentant plusieurs tranchants (4, 4', 4", 4"'),
**caractérisé en ce que**
un disque d'enclenchement (10) est associé à chaque support de tranchant (2), et **en ce que**
un disque de serrage (8) chargé par ressort est disposé entre les disques d'enclenchement (10) et le corps de base (1) et est pourvu de fentes qui coopèrent avec des saillies en forme de coin prévues sur les disques d'enclenchement (10) afin d'enclencher les supports de tranchant (2) dans la direction périphérique.

3. Outil de fraisage selon la revendication 1 ou 2,
**caractérisé en ce que**
au moins un ressort de compression (11) est disposé entre le corps de base (1) et le disque de serrage (8).

4. Outil de fraisage selon la revendication 3,
**caractérisé en ce que**
il est prévu une pluralité de ressorts de compression (11).

5. Outil de fraisage selon la revendication 4,
**caractérisé en ce que**
les ressorts de compression (11) sont disposés dans des poches (18, 19) ménagées dans le corps de base (1) et dans le disque de serrage (8).

6. Outil de fraisage selon l'une des revendications précédentes,
**caractérisé en ce que**
au moins deux types de tranchants (4, 4', 4", 4"') de profils différents sont disposés dans chaque support de tranchant (2), dont la disposition est identique dans tous les supports de tranchant (2).

7. Outil de fraisage selon la revendication 6,
**caractérisé en ce que**
chaque tranchant (4, 4', 4", 4"') est profilé différemment dans chaque support de tranchant (2).

8. Outil de fraisage selon l'une des revendications précédentes,
**caractérisé en ce que**
un seul tranchant respectif (4) dans chaque support de tranchant (2) est en position de travail et les autres tranchants (4', 4", 4"') sont en position de repos.

9. Outil de fraisage selon l'une des revendications précédentes,
**caractérisé en ce que**
un tranchant (4, 4', 4", 4"') peut être amené de sa position de repos à sa position de travail par une rotation du support de tranchant (2) autour de l'axe de rotation (15) du support.

10. Outil de fraisage selon la revendication 9,
**caractérisé en ce que**
la rotation des supports de tranchant (2) s'effectue de façon synchrone.

11. Outil de fraisage selon l'une des revendications 1 ou 8 à 10, **caractérisé en ce que**
les tranchants (4, 4', 4", 4"') situés dans leur position de travail sont profilés de manière identique et ont le même diamètre de cercle de vol.

12. Outil de fraisage selon l'une des revendications précédentes,
**caractérisé en ce que**
les supports de tranchant (2) sont couplés à force par une transmission commutable (6, 7).

13. Outil de fraisage selon la revendication 12,
**caractérisé en ce que**
la transmission commutable est une transmission à planétaires qui présente une roue solaire (6) ou une couronne dentée disposée concentriquement à l'axe de rotation (14) de l'outil à titre de roue de réglage centrale, et des roues planétaires (7) disposées concentriquement à l'axe de rotation (15) du support respectif à titre de roues de réglage périphériques.

14. Outil de fraisage selon l'une des revendications précédentes,
**caractérisé en ce que**
la rotation des supports de tranchant (2) s'effectue par étapes et chaque support de tranchant (2) est verrouillé mécaniquement lorsque le tranchant correspondant (4, 4', 4", 4'") a atteint sa position de travail.
